# EUROPEAN PATENT APPLICATION

(11) **EP 2 894 308 A1**
(43) Date of publication of application: **15.07.2015**
(21) Application number: 13831552.8
(22) Date of filing: 25.07.2013
(51) Int. Cl.: F01N 3/24, B01D 53/86

(54) **EXHAUST MIXER**

(30) Priority: 24.08.2012 JP 2012185188
(71) Applicant: Futaba Industrial Co. Ltd., Okazaki-shi, Aichi 444-8558 (JP)
(72) Inventor: NAGATA, Yoshinobu, Okazaki-shi Aichi 444-8558 (JP); SAKUMA, Yuki, Okazaki-shi Aichi 444-8558 (JP)
(74) Representative: Otten, Roth, Dobler & Partner
(86) International application number: PCT/JP2013/070202
(87) International publication number: WO 2014/030489

(57) **Abstract**

An exhaust gas stirring device is to be mounted in a tubular body that forms a flow path for exhaust gas. The exhaust gas stirring device comprises a main body that comprises a plurality of base plates facing one another at specified distances and a plurality of blade portions that are provided on a downstream side of a flow direction of the exhaust gas and are inclined with respect to the flow direction of the exhaust gas. The plurality of blade portions are formed so that there is a route in which vectors X of the individual blade portions, each vector X being defined below, go around in a given direction when viewed from a downstream side of a flow direction D of the exhaust gas. Vector X: a component of a vector in a direction of the blade portion guiding the exhaust gas, in a plane perpendicular to the flow direction of the exhaust gas.

## Description

### CROSS-REFERENCE TO RELATED APPLICATIONS

This international application claims the benefit of Japanese Patent Application No. 2012-185188 filed August 24, 2012 in the Japan Patent Office, and the entire disclosure of Japanese Patent Application No. 2012-185188 is incorporated herein by reference.

### TECHNICAL FIELD

The present invention relates to an exhaust gas stirring device to be provided in a flow path for exhaust gas from an internal combustion engine such as a diesel engine to stir the exhaust gas.

### BACKGROUND ART

A technique is conventionally known in which a reducing agent composed of a liquid such as urea water is injected into exhaust gas from a diesel engine to reduce nitrogen oxides in the exhaust gas to nitrogen. The above-described reducing agent needs to be diffused uniformly in the exhaust gas. A weak atmosphere of the reducing agent caused by insufficient diffusion leads to discharge of the nitrogen oxides without sufficient reduction occurring, whereas an excessively strong atmosphere of the reducing agent caused by insufficient diffusion results in an excess reducing agent adhered to a catalyst provided on a downstream side of a flow path for the exhaust gas, to thereby decrease the performance of the catalyst.

A technique has thus been suggested, as shown in Patent Document 1, in which a first and a second plate member each provided with blade portions and a slit are combined in a cross-shaped form by engaging their slits with each other, and the first and the second plate member are arranged in an exhaust pipe along its axial direction, to thereby generate a turning flow in the exhaust gas by means of the blade portions.

A technique has also been suggested, as shown in Patent Document 2, in which triangular fin portions are formed in a plate disc by cutting and raising the portions by pressing, etc., and the disc is arranged at right angles to the flow direction of the exhaust gas, to thereby generate a turning flow in the exhaust gas by means of the fin portions.

### PRIOR ART DOCUMENTS

### PATENT DOCUMENTS

Patent Document 1: Japanese Unexamined Patent Application Publication No. 2011-99359
Patent Document 2: Japanese Unexamined Patent Application Publication No. 2010-144569

### SUMMARY OF THE INVENTION

### PROBLEMS TO BE SOLVED BY THE INVENTION

The techniques disclosed in Patent Documents 1 and 2, however, require a device with a complicated structure to generate a turning flow. The present invention has been made in view of the above, and it is an aspect of the present invention to provide an exhaust gas stirring device that can solve the above-described problem.

### MEANS FOR SOLVING THE PROBLEMS

An exhaust gas stirring device according to an aspect of the present invention is an exhaust gas stirring device to be mounted in a tubular body that forms a flow path for exhaust gas and comprises a main body and a plurality of blade portions. The main body comprises a plurality of base plates that face one another at specified distances. The plurality of blade portions are provided to the base plates on a downstream side of a flow direction of the exhaust gas and are inclined with respect to the flow direction of the exhaust gas.

The plurality of blade portions are formed so that there is a route in which vectors X of the individual blade portions, each vector X being defined below, go around in a given direction when viewed from the downstream side of the flow direction of the exhaust gas.

Vector X: a component of a vector in a direction of the blade portion guiding the exhaust gas, in a plane perpendicular to the flow direction of the exhaust gas.

In the exhaust gas stirring device according to the aspect of the present invention, the plurality of blade portions are formed to meet the above-described condition regarding vector X so that a turning flow is generated in the exhaust gas. This further improves the effect of the exhaust gas stirring device stirring the exhaust gas.

In the exhaust gas stirring device, a plurality of blade portions guiding the exhaust gas in different directions can be provided to the plurality of base plates facing one another at specified distances. It is thus not always necessary to provide differently oriented base plates corresponding to the respective blade portions guiding the exhaust gas in different directions. This leads to simplification of the configuration of the exhaust gas stirring device.

The main body may be formed, for example, from at least one sheet of bent plate member, and the plurality of base plates may each be a part of the bent plate member. In this case, the production of the main body and the mounting thereof to the tubular body are easy.

The main body may, for example, have an extended portion that extends outward from other portions of the main body on an upstream side of the flow direction of the exhaust gas. In this case, the exhaust gas stirring device can be welded to an inner surface of the tubular body at the extended portion. This enables much easier mounting of the exhaust gas stirring device.

### BRIEF DESCRIPTION OF THE DRAWINGS

FIG. 1 is a perspective view illustrating a configuration of an exhaust gas stirring device 1.
FIG. 2 is an explanatory diagram of the exhaust gas stirring device 1 mounted in a tubular body 101 viewed from a downstream side of a flow direction D of exhaust gas.
FIG. 3 is a developed view of the exhaust gas stirring device 1.
FIG. 4 is an explanatory diagram of a main body 3 viewed from the downstream side of the flow direction D of the exhaust gas.
FIG. 5A is an explanatory diagram of a blade portion 5 viewed from the downstream side of the flow direction D of the exhaust gas; FIG. 5B is an explanatory diagram of the blade portion 5 viewed from a direction F in FIG. 5A; and FIG. 5C is an explanatory diagram of the blade portion 5 viewed from a direction G in FIG. 5A.
FIG. 6A is an explanatory diagram of a blade portion 5 in another mode viewed from the downstream side of the flow direction D of the exhaust gas; FIG. 6B is an explanatory diagram of the blade portion 5 in the another mode viewed from a direction F in FIG. 6A; and FIG. 6C is an explanatory diagram of the blade portion 5 in the another mode viewed from a direction G in FIG. 6A.
FIG. 7A is an explanatory diagram of a blade portion 5 in another mode viewed from the downstream side of the flow direction D of the exhaust gas; FIG. 7B is an explanatory diagram of the blade portion 5 in the another mode viewed from a direction F in FIG. 7A; and FIG. 7C is an explanatory diagram of the blade portion 5 in the another mode viewed from a direction G in FIG. 7A.
FIG. 8A is an explanatory diagram of a blade portion 5 in another mode viewed from the downstream side of the flow direction D of the exhaust gas; FIG. 8B is an explanatory diagram of the blade portion 5 in the another mode viewed from a direction F in FIG. 8A; and FIG. 8C is an explanatory diagram of the blade portion 5 in the another mode viewed from a direction G in FIG. 8A.
FIG. 9A is an explanatory diagram of a blade portion 5 in another mode viewed from the downstream side of the flow direction D of the exhaust gas; FIG. 9B is an explanatory diagram of the blade portion 5 in the another mode viewed from a direction F in FIG. 9A; and FIG. 9C is an explanatory diagram of the blade portion 5 in the another mode viewed from a direction G in FIG. 9A.
FIG. 10A is an explanatory diagram of a blade portion 5 in another mode viewed from the downstream side of the flow direction D of the exhaust gas; FIG. 10B is an explanatory diagram of the blade portion 5 in the another mode viewed from a direction F in FIG. 10A; and FIG. 10C is an explanatory diagram of the blade portion 5 in the another mode viewed from a direction G in FIG. 10A.
FIG. 11A is an explanatory diagram of a blade portion 5 in another mode viewed from the downstream side of the flow direction D of the exhaust gas; FIG. 11B is an explanatory diagram of the blade portion 5 in the another mode viewed from a direction F in FIG. 11A; and FIG. 11C is an explanatory diagram of the blade portion 5 in the another mode viewed from a direction G in FIG. 11A.
FIG. 12A is an explanatory diagram illustrating a vector E and a vector X in a blade portion 8, 9, 12, 13, 16, 17; and FIG. 12B is an explanatory diagram illustrating a vector E and a vector X in a blade portion 5, 6, 7, 10, 11, 14, 15, 18, 19, 20.
FIG. 13 is an explanatory diagram illustrating the vectors X in the individual blade portions.
FIG. 14 is a perspective view illustrating a configuration of the exhaust gas stirring device 1.
FIG. 15 an explanatory diagram of the exhaust gas stirring device 1 mounted in the tubular body 101 viewed from the downstream side of the flow direction D of the exhaust gas.
FIG. 16 is a developed view of a member 50.
FIG. 17 is an explanatory diagram illustrating a positional relation between the two members 50.
FIG. 18 is an explanatory diagram of a main body 51 viewed from the downstream side of the flow direction D of the exhaust gas.
FIG. 19 is an explanatory diagram illustrating vectors X in individual blade portions.

### EXPLANATION OF REFERENCE NUMERALS

1... exhaust gas stirring device, 3, 51...main body, 5-20, 52-59...blade portion, 21-31, 60-65... section, 33, 67...extended portion, 50...member, 101... tubular body

### MODE FOR CARRYING OUT THE INVENTION

Embodiments of the present invention will be described based on the drawings.

### [First Embodiment]

### 1. Configuration of Exhaust Gas Stirring Device 1

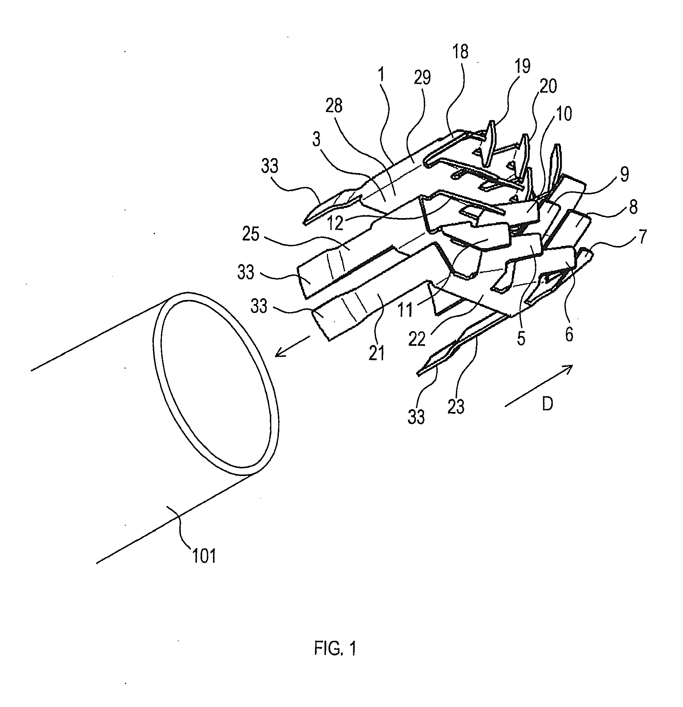

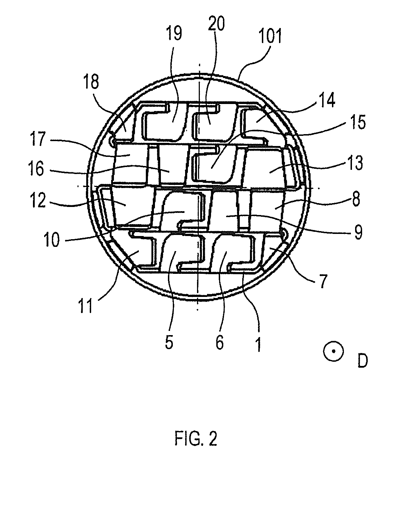

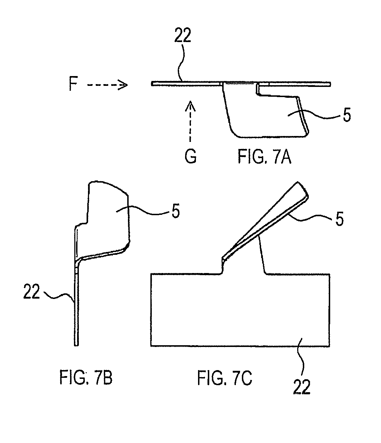

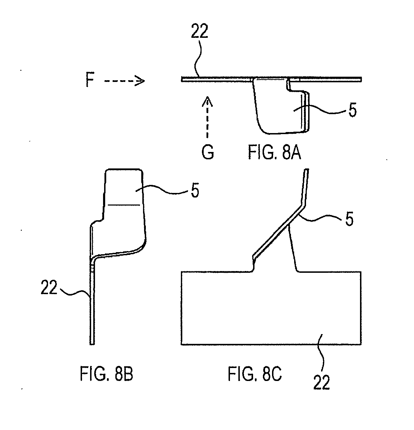

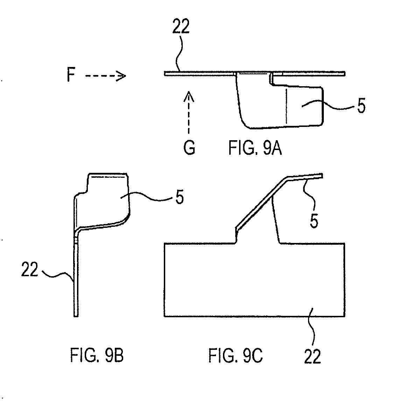

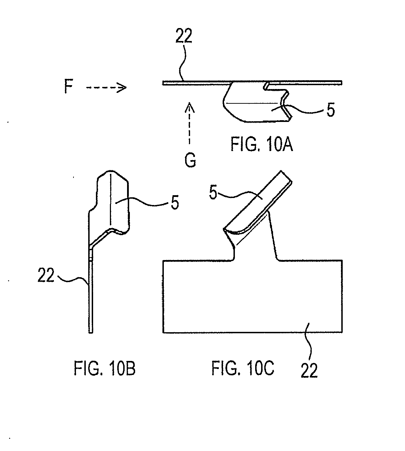

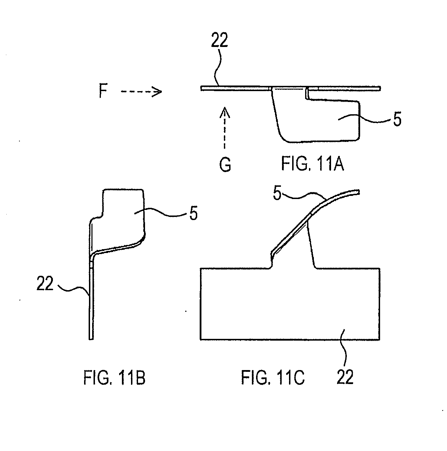

A configuration of an exhaust gas stirring device 1 will be described based on FIG. 1 to FIG. 13. The exhaust gas stirring device 1 is a device to be mounted in a tubular body 101 that forms a flow path for exhaust gas from a diesel engine. The flow path for the exhaust gas is provided, on its upstream side from the exhaust gas stirring device 1, with a mechanism (not shown) in which a reducing agent composed of a liquid such as urea water is injected into the exhaust gas and is provided, on its downstream side from the exhaust gas stirring device 1, with a catalyst (not shown) that provides action to reduce nitrogen oxides.

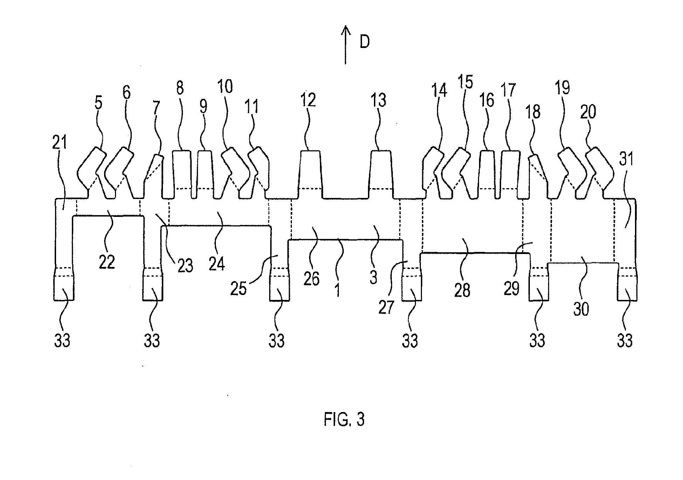

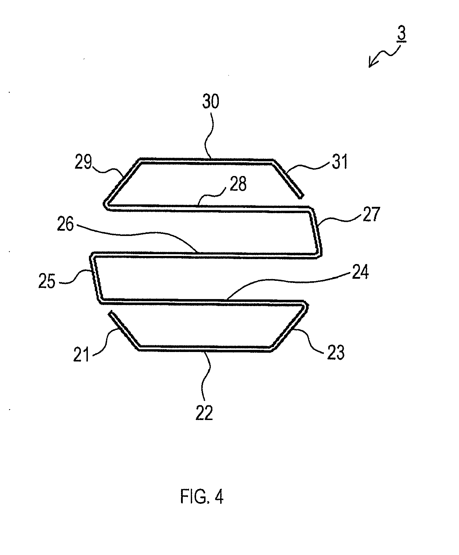

The exhaust gas stirring device 1 is formed by bending a sheet of metal plate member having a form as shown in FIG. 3 into a form as shown in FIG. 1. To be more specific, the exhaust gas stirring device 1 comprises a main body 3 and a plurality of blade portions 5-20. The main body 3 is divided with bend lines (indicated as dotted lines in FIG. 3) into sections 21-31. When the main body 3 is bent along each bend line, the sections 21-31 are brought into a positional relation as shown in FIG. 4. At this time, the sections 22, 24, 26, 28, and 30 are all planes facing one another at specified distances in parallel with one another. The sections 22, 24, 26, 28, and 30 show an embodiment of a plurality of base plates. The sections 21, 23, 25, 27, 29, and 31 face an inner surface of the tubular body 101 when the exhaust gas stirring device 1 is mounted in the tubular body 101.

In the sections 21, 23, 25, 27, 29, and 31 of the main body 3, portions on a lower side of FIG. 3 (portions on an upstream side of a flow direction D of the exhaust gas) are formed to be extended portions 33 that extend outward from other portions of the main body 3 by being bent into a stepped form as shown in FIG. 1. When the exhaust gas stirring device 1 is mounted in the tubular body 101, only the extended portions 33 contact the inner surface of the tubular body 101 to provide a gap between the other portions of the exhaust gas stirring device 1 and the inner surface of the tubular body 101. By welding the extended portions 33 and the inner surface of the tube body 101 together, the exhaust gas stirring device 1 can be fixed to the tubular body 101.

A plurality of blade portions 5-20 are provided to the main body 3 on an upper side of FIG. 3 (a downstream side of the flow direction D of the exhaust gas). The plurality of blade portions 5-20 are each inclined with respect to the flow direction D of the exhaust gas by being bent along bend lines (shown as dotted lines in FIG. 3) near the main body 3.

The bend lines for the blade portions 8, 9, 12, 13, 16, and 17 from among the plurality of blade portions 5-20 are perpendicular to the flow direction D of the exhaust gas, and the bend lines for the blade portions 5, 6, 7, 10, 11, 14, 15, 18, 19, and 20 are oblique to the flow direction D of the exhaust gas. Thus, the directions into which the blade portions 8, 9, 12, 13, 16, and 17 fall by being bent along their respective bend lines and the directions into which the blade portions 5, 6, 7, 10, 11, 14, 15, 18, 19, and 20 fall by being bent along their respective bend lines are different from one another.

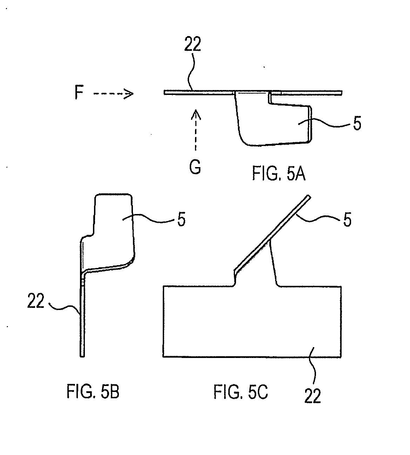

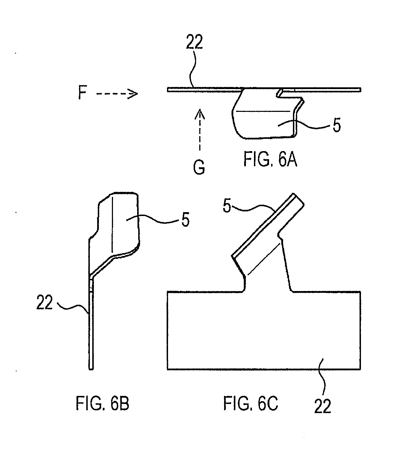

FIGS. 5A-5C show forms of the blade portion 5. The forms of the blade portion 5 may also be any of those shown in FIGS. 6A-6C, 7A-7C, 8A-8C, 9A-9C, 10A-10C, and 11A-11C. The blade portions 6, 7, 10, 11, 14, 15, 18, 19, and 20 can have similar forms to the forms of the blade portion 5.

Being inclined with respect to the flow direction D of the exhaust gas as described above, the plurality of blade portions 5-20 guide the exhaust gas flowing from the upstream side along the flow direction D of the exhaust gas into directions that correspond to the respective inclination of the individual blade portions. The direction in which each blade portion is inclined and the direction in which each blade portion guides the exhaust gas are set as described below.

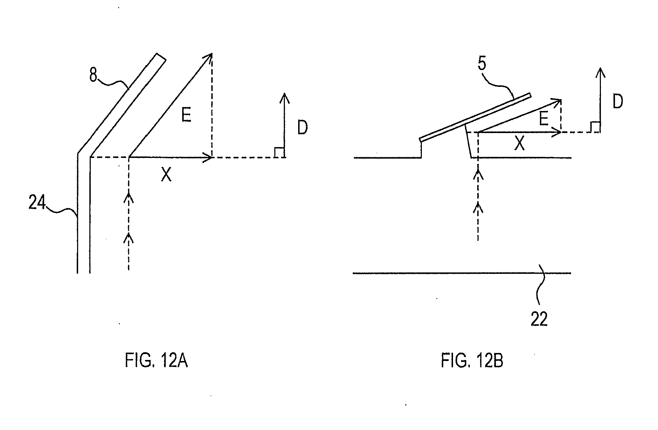

A vector in a direction of each blade portion guiding the exhaust gas is defined as vector E. Vector E can be a vector directing from a bottom direction of each blade portion along a surface of each blade portion towards an end direction of each blade portion. For example, vector E of the blade portion 8, 9, 12, 13, 16, 17 is as shown in FIG. 12A. Vector E of the blade portion 5, 6, 7, 10, 11, 14, 15, 18, 19, 20 is as shown in FIG. 12B. A component of vector E in a plane perpendicular to the flow direction D of the exhaust gas is defined as vector X. Vector X is uniformly determined for each blade portion.

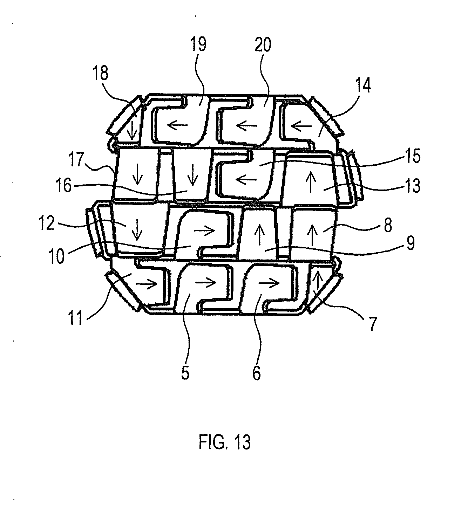

Vectors X of the individual blade portions, as a whole, go around in a given route as shown in FIG. 13 when the exhaust gas stirring device 1 is viewed from the downstream side of the flow direction D of the exhaust gas. In other words, when the exhaust gas stirring device 1 is viewed from the downstream side of the flow direction D of the exhaust gas, there is a route in which a step of moving from an arbitrary blade portion to its adjacent blade portion having an amount of change in the direction of vector X of 90 degrees or below is sequentially repeated to thereby enable a return to the original blade portion. In FIG. 13, the arrows indicate the directions of the vectors X.

### 2. Effects Provided by Exhaust Gas Stirring Device 1

(1) When the exhaust gas stirring device 1 is viewed from the downstream side of the flow direction D of the exhaust gas, the vectors X of the individual blade portions are arranged in a counterclockwise direction as shown in FIG. 13. Thus, the exhaust gas passing through the exhaust gas stirring device 1 is guided in the direction of the vector X at each blade portion to result in generation of a turning flow in the exhaust gas passing through the exhaust gas stirring device 1 as a whole in a counterclockwise direction as shown in FIG. 13. This further improves the effect of the exhaust gas stirring device 1 stirring the exhaust gas.
(2) In the exhaust gas stirring device 1, both the blade portions 8, 9, 12, 13, 16, and 17 having vectors X in up-and-down directions in FIG. 13 and the blade portions 5, 6, 10, 11, 14, 15, 19, and 20 having vectors X in left-and-right directions in FIG. 13 can be provided to the sections 22, 24, 26, 28, and 30 of the main body 3 that are parallel to one another. Thus, it is not necessary to provide differently oriented base plates corresponding to the respective directions of the vectors X in the tubular body 101.
(3) Since the exhaust gas stirring device 1 is formed by bending a sheet of metal plate member, its production and mounting to the tubular body 101 are easy.
(4) The exhaust gas stirring device 1 can be welded, at the extended portions 33 that extend outward, to the inner surface of the tubular body 101. This further facilitates the mounting of the exhaust gas stirring device 1.
(5) The exhaust gas stirring device 1 has the sections 22, 24, 26, 28, and 30 that are arranged parallel to one another and the blade portions 5, 6, 8-17, 19, and 20 that are provided between these sections, and thus, the blade portions 5, 6, 8-17, 19, and 20 can cover a wide range of a cross section perpendicular to an axial direction of the tubular body 101. This enables the exhaust gas stirring device 1 to generate a turning flow efficiently.
(6) The exhaust gas stirring device 1 has the sections 22, 24, 26, 28, and 30 that are arranged parallel to one another and the blade portions 5, 6, 8-17, 19, and 20 that are provided between these sections, and thus, the blade portions 5, 6, 8-17, 19, and 20 are hard to interfere with one another. This enables easy production of the exhaust gas stirring device 1.

### [Second Embodiment]

### 1. Configuration of Exhaust Gas Stirring Device 1

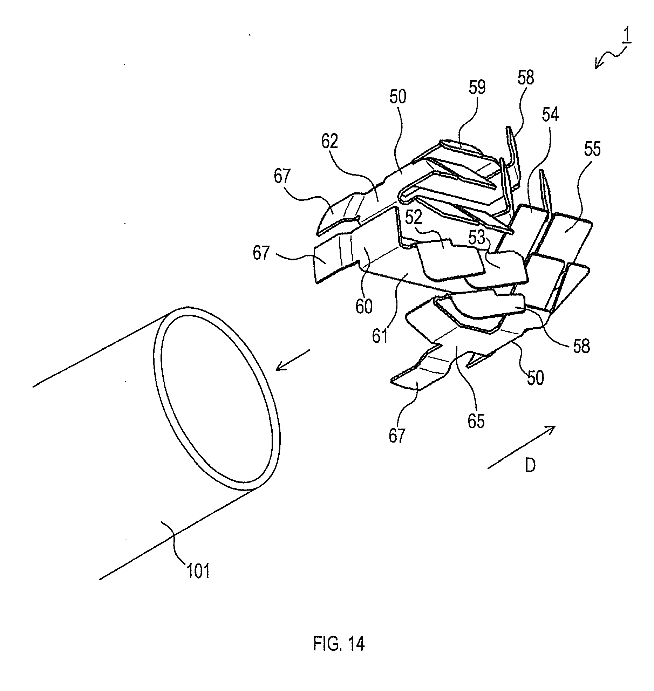

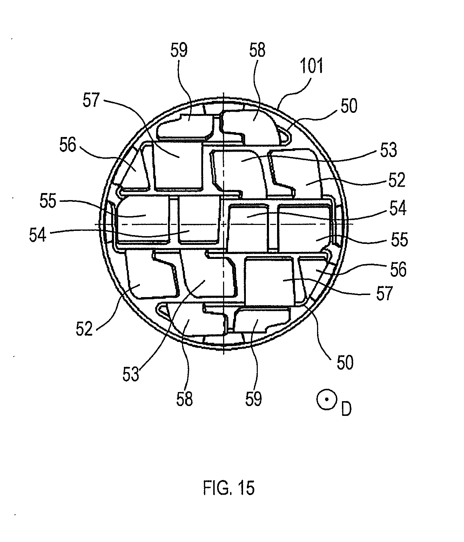

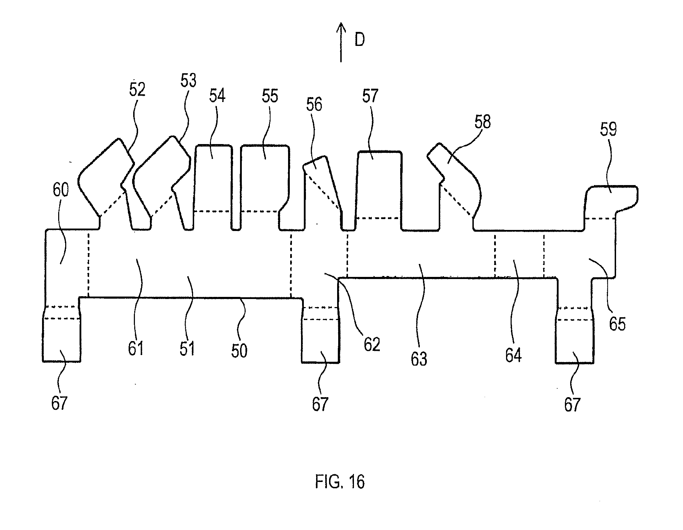

A configuration of the exhaust gas stirring device 1 will be described based on FIG. 14 to FIG. 18. The exhaust gas stirring device 1 is a device to be mounted in the tubular body 101 that forms a flow path for exhaust gas. The exhaust gas stirring device 1 is a combination of two members 50 that are each formed by bending a sheet of metal plate member having a form as shown in FIG. 16 into a form as shown in FIG. 14.

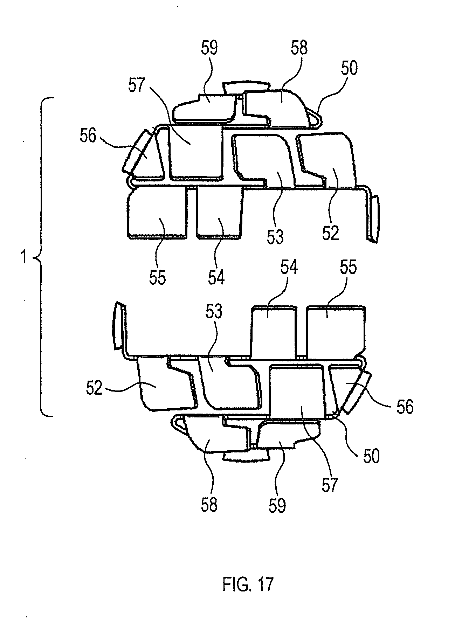

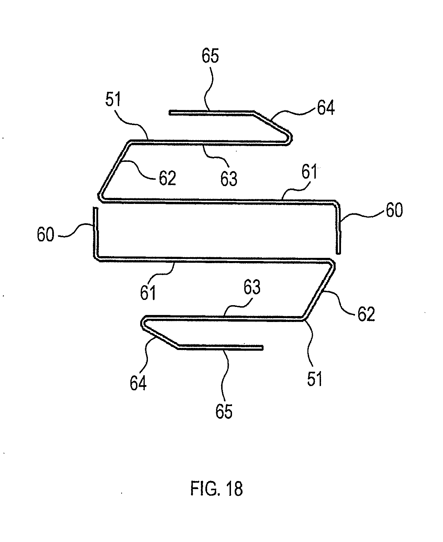

The member 50 comprises a main body 51 and a plurality of blade portions 52-59. The main body 51 is divided with bend lines (indicated as dotted lines in FIG. 16) into sections 60-65. When the main body 51 is bent along each bend line, the sections 60-65 are brought into a positional relation as shown in FIG. 18. At this time, the sections 61, 63, and 65 are all planes facing one another at specified distances in parallel with one another. The sections 61, 63, and 65 show an embodiment of a plurality of base plates. The sections 60, 62, and 64 face the inner surface of the tubular body 101 when the exhaust gas stirring device 1 is mounted in the tubular body 101. The two members 50 are combined together oriented as shown in FIG. 17 and FIG. 18.

In the sections 60, 62, and 65 of the main body 51, portions on a lower side of FIG. 16 (portions on the upstream side of the flow direction D of the exhaust gas) are formed to be extended portions 67 that extend outward from other portions of the main body 51 by being bent into a stepped form as shown in FIG. 14. When the exhaust gas stirring device 1 is mounted in the tubular body 101, only the extended portions 67 contact the inner surface of the tubular body 101 to provide a gap between the other portions of the exhaust gas stirring device 1 and the inner surface of the tubular body 101. By welding the extended portions 67 and the inner surface of the tubular body 101 together, the exhaust gas stirring device 1 can be fixed to the tubular body 101.

A plurality of blade portions 52-59 are provided to the main body 3 on an upper side of FIG. 16 (the downstream side of the flow direction D of the exhaust gas). The plurality of blade portions 52-59 are each inclined with respect to the flow direction D of the exhaust gas by being bent along bend lines (shown as dotted lines in FIG. 16) near the main body 51.

The blade portions 52, 53, 56, and 58 are bent similarly as are the blade portion 5, etc. of the first embodiment. The blade portions 54, 55, 57, and 59 are bent similarly as are the blade portion 8, etc. of the first embodiment.

Being inclined with respect to the flow direction D of the exhaust gas as described above, the plurality of blade portions 52-59 guide the exhaust gas flowing from the upstream side along the flow direction D of the exhaust gas into directions that correspond to the respective inclination of the individual blade portions. The direction in which each blade portion is inclined and the direction in which each blade portion guides the exhaust gas are set as described below.

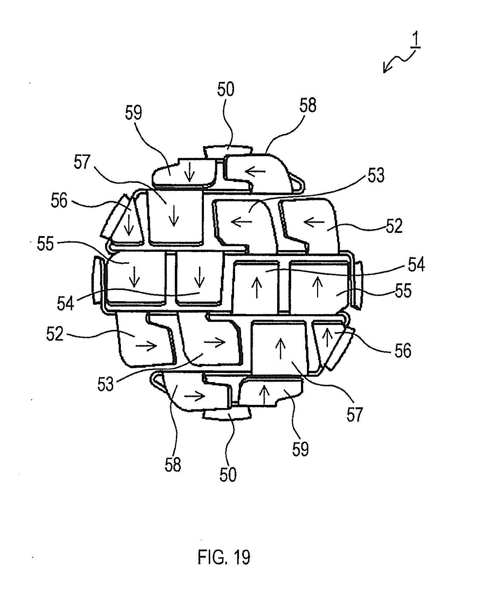

Vectors X of the individual blade portions, as a whole, go around in a given route as shown in FIG. 19 when the exhaust gas stirring device 1 is viewed from the downstream side of the flow direction D of the exhaust gas. In other words, when the exhaust gas stirring device 1 is viewed from the downstream side of the flow direction D of the exhaust gas, there is a route in which a step of moving from an arbitrary blade portion to its adjacent blade portion having an amount of change in the direction of vector X of 90 degrees or below is sequentially repeated to thereby enable a return to the original blade portion. In FIG. 19, arrows indicate the directions of the vectors X.

### 2. Effects Provided by Exhaust Gas Stirring Device 1

(1) When the exhaust gas stirring device 1 is viewed from the downstream side of the flow direction D of the exhaust gas, the vectors X of the individual blade portions are arranged in a counterclockwise direction, as shown in FIG. 19. Thus, the exhaust gas passing through the exhaust gas stirring device 1 is guided in the direction of the vector X at each blade portion to result in generation of a turning flow in the exhaust gas passing through the exhaust gas stirring device 1 as a whole in a counterclockwise direction as shown in FIG. 19. This further improves the effect of the exhaust gas stirring device 1 stirring the exhaust gas.
(2) In the exhaust gas stirring device 1, both the blade portion 54, 55, and 57 having vectors X in up-and-down directions in FIG. 19 and the blade portion 52, 53, and 58 having vectors X in left-and-right directions in FIG. 19 can be provided to the sections 61 and 63 of the main body 3 that are parallel to each other. Thus, it is not necessary to provide differently oriented base plates corresponding to the respective directions of the vectors X in the tubular body 101.
(3) Since the two members 50 constituting the exhaust gas stirring device 1 are each formed by bending a sheet of metal plate member, their production and mounting to the tubular body 101 are easy.
(4) The exhaust gas stirring device 1 can be welded, at the extended portions 67 that extend outward, to the inner surface of the tubular body 101. This further facilitates the mounting of the exhaust gas stirring device 1.

The present invention should not be restricted to the above-described embodiments. Needless to say, it can be practiced in various forms within the scope of the present invention.

The main body 3, 51, for example, may be formed by joining a plurality of components. The sections 22, 24, 26, 28, and 30 of the main body 3, for example, may be produced separately from other portions of the main body 3 and joined together with the other portions later.

The exhaust gas stirring device 1 may be formed by joining the blade portions 5-20 and 52-59 produced separately from the main body 3, 51 to the main body 3, 51.

Furthermore, the main body 3, 51 may not comprise the extended portions 33, 67. In this case, a part or the whole of an outer surface of the main body 3, 51, for example, can be joined to the inner surface of the tubular body 101.

The forms of the blade portions 5-20 and 52-59, the directions of the inclination thereof, and the like should not be restricted to those described in the above embodiments but can be set as appropriate.

Although the vector X of each blade portion changes in direction with respect to its adjacent blade portion in units of 90 degrees in the above-described embodiments, it may change in direction in units of different degrees (such as 30 degrees, 45 degrees, 60 degrees, and so on).

## Claims

1. An exhaust gas stirring device to be mounted in a tubular body that forms a flow path for exhaust gas, the device comprising:
a main body comprising a plurality of base plates that face one another at specified distances; and
a plurality of blade portions that are provided to the base plates on a downstream side of a flow direction of the exhaust gas and are inclined with respect to the flow direction of the exhaust gas,
wherein the plurality of blade portions are formed so that there is a route in which vectors X of the individual blade portions, each vector X being defined below, go around in a given direction when viewed from the downstream side of the flow direction of the exhaust gas:
vector X is a component of a vector in a direction of the blade portion guiding the exhaust gas, in a plane perpendicular to the flow direction of the exhaust gas.

2. The exhaust gas stirring device according to claim 1,
wherein the main body is formed from at least one sheet of bent plate member and the plurality of base plates are each a part of the bent plate member.

3. The exhaust gas stirring device according to claim 1 or 2,
wherein the main body comprises an extended portion that extends outward from other portions of the main body on an upstream side of the flow direction of the exhaust gas.
